# EUROPÄISCHE PATENTSCHRIFT

(11) **EP 2 777 129 B1**
(45) Veröffentlichungstag und Bekanntmachung des Hinweises auf die Patenterteilung: **14.09.2016**
(21) Anmeldenummer: 12701460.3
(22) Anmeldetag: 09.01.2012
(51) Int. Cl.: B60L 11/18, H02J 7/00

(54) **LADEEINRICHTUNG**
CHARGING UNIT
DISPOSITIF DE CHARGE

(43) Veröffentlichungstag der Anmeldung: 17.09.2014
(73) Patentinhaber: Siemens Aktiengesellschaft, 80333 München (DE)
(72) Erfinder: FOGANG TCHONLA, Etienne, 91058 Erlangen (DE)
(86) Internationale Anmeldenummer: PCT/EP2012/050234
(87) Internationale Veröffentlichungsnummer: WO 2013/104409

(56) Entgegenhaltungen:
- WO-A2-2011/145939
- JP-A- 5 336 673
- JP-A- 2001 069 678

## Beschreibung

Die Erfindung betrifft eine Ladeeinrichtung und ein Verfahren zum elektrischen Laden einer Fahrbatterie eines elektrisch antreibbaren Fahrzeugs.

Elektrisch antreibbare Fahrzeuge werden in Zukunft im Straßenverkehr zunehmend eine bedeutende Rolle einnehmen. Derartige elektrisch antreibbare Fahrzeuge weisen eine elektrische Fahrbatterie auf, die die elektrische Energie für die Fortbewegung des Fahrzeugs zur Verfügung stellt. Zum Laden derartiger Fahrbatterien wird es Ladeeinrichtungen geben, die ortsfest (z.B. an einer Art Stromtankstelle) installiert sind. Solche Ladeeinrichtungen können als Gleichstrom-Ladeeinrichtungen ausgestaltet sein. Das sind Ladeeinrichtungen, die einen Lade-Gleichstrom zum Laden der Fahrbatterie zur Verfügung stellen. Solche Ladeeinrichtungen können aber auch als Wechselstrom-Ladeeinrichtungen ausgestaltet sein. Das sind Ladeeinrichtungen, die einen Lade-Wechselstrom zum Laden der Fahrbatterie zur Verfügung stellen.

Um Fahrbatterien schnell aufzuladen, werden Ladeeinrichtungen benötigt, die große elektrische Leistungen zum Laden bereitstellen können.

Eine Ladeeinrichtung ist beispielsweise aus dem Dokument WO 2011/145939 A2 bekannt. Darin wird eine Ladeeinrichtung für elektrisch antreibbare Fahrzeuge beschrieben. Die Ladeeinrichtung umfasst dabei wenigstens einen Ladeanschluss, welcher dazu eingerichtet ist, elektrische Leistung mit zumindest einem Elektrofahrzeug auszutauschen. Weiterhin umfasst die Ladeeinrichtung netzanschlussseitige elektrische Umrichter, um elektrische Leistung einer Energiequelle, wie z.B. einem Stromnetz, zum Laden des Elektrofahrzeugs bereitzustellen.

Der Erfindung liegt die Aufgabe zugrunde, eine Ladeeinrichtung und ein Verfahren anzugeben, die ein effizientes Laden ermöglichen.

Diese Aufgabe wird erfindungsgemäß gelöst durch eine Ladeeinrichtung und ein Verfahren nach den unabhängigen Patentansprüchen. Vorteilhafte Ausgestaltungen der Ladeeinrichtung und des Verfahrens sind in den abhängigen Patentansprüchen angegeben.

Erfindungsgemäß angegeben wird eine Ladeeinrichtung zum elektrischen Laden einer Fahrbatterie eines elektrisch antreibbaren Fahrzeugs mit einem Netzanschluss zum Anschluss der Ladeeinrichtung an ein Energieversorgungsnetz, mindestens einem Ladeanschluss zum Anschluss eines elektrisch antreibbaren Fahrzeugs, einer Mehrzahl von netzanschlussseitigen elektrischen Umrichtern, deren Eingänge elektrisch mit dem Netzanschluss verbunden sind und deren Ausgänge elektrisch mit einem Zwischenkreis der Ladeeinrichtung verbunden sind, wobei die netzanschlussseitigen Umrichter unabhängig voneinander zuschaltbar oder abschaltbar sind (d.h. jeweils einzeln zuschaltbar oder abschaltbar sind), und mit einer Steuerung, welche dazu eingerichtet ist in Abhängigkeit von der insgesamt über den mindestens einen Ladeanschluss zu übertragenden elektrischen Leistung die netzanschlussseitigen Umrichter zuzuschalten oder abzuschalten, wobei die Steuerung eingerichtet ist, die netzanschlussseitigen Umrichter so zuzuschalten oder abzuschalten, dass die insgesamt über den mindestens einen Ladeanschluss zu übertragende elektrische Leistung von einer minimalen Anzahl an netzanschlussseitigen Umrichtern zur Verfügung gestellt wird. Hierbei ist besonders vorteilhaft, dass mehrere netzanschlussseitige Umrichter in der Ladeeinrichtung angeordnet sind und dass diese netzanschlussseitigen Umrichter jeweils einzeln zuschaltbar und/oder abschaltbar sind. Die netzanschlussseitigen Umrichter sind jeweils unabhängig voneinander zuschaltbar und/oder abschaltbar. Dadurch ist vorteilhafterweise der Zwischenkreis der Ladeeinrichtung von einem oder von mehreren der netzanschlussseitigen Umrichter mit elektrischer Energie bzw. elektrischer Leistung versorgbar. Damit lassen sich die Verluste in den netzanschlussseitigen Umrichtern verringern und ein hoher Wirkungsgrad der Ladeeinrichtung erreichen.

Unter Zuschalten wird hier z.B. ein Einschalten eines Umrichters und unter Abschalten wird ein Ausschalten des Umrichters verstanden. Ein zugeschalteter (eingeschalteter) Umrichter überträgt elektrische Energie zwischen dem Netzanschluss und dem Zwischenkreis, während ein abgeschalteter netzanschlussseitiger Umrichter keine Energie zwischen dem Netzanschluss und dem Zwischenkreis überträgt. Beispielsweise befindet sich ein Umrichter im abgeschalteten Zustand in einem Ruhezustand (Standby). Unter Zuschalten und Abschalten kann aber auch ein elektrisches Trennen des Stromkreises des Umrichters mittels eines Schalters verstanden werden. (Auch im abgeschalteten Zustand ist eine Kommunikation zwischen dem Umrichter und einer Steuerung möglich.)

Die Ladeeinrichtung kann mindestens einen ladeanschlussseitigen Umrichter aufweisen, dessen Eingang mit dem Zwischenkreis und dessen Ausgang mit dem Ladeanschluss verbunden ist. Dieser mindestens eine ladeanschlussseitige Umrichter überträgt die elektrische Energie bzw. elektrische Leistung von dem Zwischenkreis zu dem Ladeanschluss.

Die Ladeeinrichtung kann auch so ausgestaltet sein, dass die netzanschlussseitigen Umrichter elektrisch parallel geschaltet sind.

Die Ladeeinrichtung weist auch eine Steuerung auf, welche dazu eingerichtet ist, in Abhängigkeit von der insgesamt über den mindestens einen Ladeanschluss zu übertragenden elektrischen Leistung die netzanschlussseitigen Umrichter zuzuschalten oder abzuschalten. Dadurch können in Abhängigkeit von der zu übertragenden elektrischen Leistung ein oder mehrere netzanschlussseitige elektrische Umrichter zugeschaltet werden und die anderen netzanschlussseitigen elektrischen Umrichter abgeschaltet bleiben bzw. abgeschaltet werden.

Die Ladeeinrichtung kann auch so ausgestaltet sein, dass die Steuerung eingerichtet ist, die insgesamt über den mindestens einen Ladeanschluss zu übertragende elektrische Leistung fortlaufend zu überwachen und bei Bedarf fortlaufend die netzanschlussseitigen Umrichter zuzuschalten oder abzuschalten. Dies ermöglicht es, während des Ladevorgangs fortlaufend die Anzahl der zugeschalteten netzanschlussseitigen Umrichter an einen sich verändernden Leistungsbedarf anzupassen.

Die Ladeeinrichtung kann auch so ausgestaltet sein, dass die Steuerung eingerichtet ist, die netzanschlussseitigen Umrichter so zuzuschalten oder abzuschalten, dass die insgesamt über den mindestens einen Ladeanschluss zu übertragende elektrische Leistung von einer minimalen Anzahl an netzanschlussseitigen Umrichtern zur Verfügung gestellt wird. Dadurch wird es vorteilhafter ermöglicht, wenige netzanschlussseitige Umrichter beim Ladevorgang zu nutzen und diese netzanschlussseitigen Umrichter überwiegend in einem Bereich größerer elektrischer Leistung oder sogar nahe ihrer Nennleistung zu betreiben, was einen großen Wirkungsgrad ermöglicht.

Die Ladeeinrichtung kann auch so ausgestaltet sein, dass die Steuerung eingerichtet ist, bei mindestens einem bereits zugeschalteten netzanschlussseitigen Umrichter erst dann einen weiteren netzanschlussseitigen Umrichter zuzuschalten, wenn die insgesamt über den mindestens einen Ladeanschluss zu übertragende elektrische Leistung größer ist als die Summe der Nennleistungen der bereits zugeschalteten netzanschlussseitigen Umrichter. Damit wird vorteilhafterweise erreicht, dass erst dann ein weiterer netzanschlussseitiger Umrichter zugeschaltet wird, wenn die bereits zugeschalteten Umrichter mit ihrer Nennleistung arbeiten. Bei Nennleistung arbeiten die Umrichter mit einem hohen Wirkungsgrad.

Die Ladeeinrichtung kann auch so ausgestaltet sein, dass zusätzlich die ladeanschlussseitigen Umrichter jeweils einzeln zuschaltbar oder abschaltbar sind, und die Steuerung eingerichtet ist, die ladeanschlussseitigen Umrichter jeweils nur dann zuzuschalten, wenn der den einzelnen ladeanschlussseitigen Umrichtern jeweils zugeordnete Ladeanschluss elektrisch mit einem Fahrzeug verbunden ist. Dabei ist vorteilhaft, dass bei einem unbesetzten Ladeanschluss (d.h. bei einem nicht elektrisch mit einem Fahrzeug verbundenen Ladeanschluss) der der jeweils zugehörige ladeanschlussseitige Umrichter abgeschaltet ist und dadurch keine elektrische Energie verbraucht. Auch das führt zu einer energieeffizienten Ladeeinrichtung.

Weiterhin kann die Ladeeinrichtung mindestens eine Messeinrichtung zum Erfassen der über den mindestens einen Ladeanschluss übertragenen elektrischen Leistung aufweisen. Diese Messeinrichtung(en) dient zum Überwachen der über den Ladeanschluss oder die Ladeanschlüsse übertragenen elektrischen Leistung.

Die genannten Leistungen können jeweils Wirkleistungen sein.

Die Ladeeinrichtung kann auch so realisiert sein, dass der Netzanschluss ein Wechselstrom-Netzanschluss ist, die netzanschlussseitigen elektrischen Umrichter Wechselstrom-Gleichstrom-Umrichter sind und der Zwischenkreis ein Gleichstrom-Zwischenkreis ist.

Die Ladeeinrichtung kann auch so ausgestaltet sein, dass der mindestens eine ladeanschlussseitige Umrichter ein Gleichstrom-Gleichstrom-Umrichter ist.

Erfindungsgemäß angegeben wird weiterhin ein Verfahren zum elektrischen Laden einer Fahrbatterie eines elektrisch antreibbaren Fahrzeugs mittels einer Ladeeinrichtung, die einen Netzanschluss zum Anschluss der Ladeeinrichtung an ein Energieversorgungsnetz, mindestens einem Ladeanschluss zum Anschluss eines elektrisch antreibbaren Fahrzeugs, und eine Mehrzahl von netzanschlussseitigen elektrischen Umrichtern, deren Eingänge elektrisch mit dem Netzanschluss verbunden sind und deren Ausgänge elektrisch mit einem Zwischenkreis der Ladeeinrichtung verbunden sind, aufweist, wobei die netzanschlussseitigen Umrichter jeweils einzeln zuschaltbar oder abschaltbar sind, und wobei bei dem Verfahren in Abhängigkeit von der insgesamt über den mindestens einen Ladeanschluss zu übertragenden elektrischen Leistung die netzanschlussseitigen Umrichter zugeschaltet oder abgeschaltet werden, wobei die netzanschlussseitigen Umrichter so zugeschaltet oder abgeschaltet werden, dass die insgesamt über den mindestens einen Ladeanschluss zu übertragende elektrische Leistung von einer minimalen Anzahl an netzanschlussseitigen Umrichtern zur Verfügung gestellt wird.

Dieses Verfahren kann so ausgestaltet sein, dass die insgesamt über den mindestens einen Ladeanschluss zu übertragende elektrische Leistung fortlaufend überwacht wird und bei Bedarf fortlaufend die netzanschlussseitigen Umrichter zugeschaltet oder abgeschaltet werden.

Das Verfahren kann auch so ablaufen, dass bei mindestens einem bereits zugeschalteten netzanschlussseitigen Umrichter erst dann ein weiterer netzanschlussseitiger Umrichter zugeschaltet wird, wenn die insgesamt über den mindestens einen Ladeanschluss zu übertragende elektrische Leistung (d.h. bei nur einem vorhandenen Ladeanschluss die über diesen Ladeanschluss übertragene elektrische Leistung oder bei mehrerer vorhandenen Ladeanschlüssen die Summe der über diese Ladeanschlüsse übertragenen elektrischen Leistungen) größer ist als die Nennleistung des bereits zugeschalteten netzanschlussseitigen Umrichters oder die Summe der Nennleistungen der bereits zugeschalteten netzanschlussseitigen Umrichter.

Das Verfahren kann auch so ablaufen, dass die ladeanschlussseitigen Umrichter jeweils einzeln zuschaltbar oder abschaltbar sind, und die ladeanschlussseitigen Umrichter jeweils nur dann zugeschaltet werden, wenn der den einzelnen ladeanschlussseitigen Umrichtern jeweils zugeordnete Ladeanschluss elektrisch mit einem Fahrzeug verbunden ist.

Mittels dieser Verfahren werden dieselben Vorteile erreicht, die zuvor im Zusammenhang mit der Ladeeinrichtung genannt sind.

Im Folgenden wird die Erfindung anhand eines Ausführungsbeispiels näher erläutert. Dazu ist in der
- Figur: eine Darstellung eines Ausführungsbeispiels der Ladeeinrichtung und des Verfahrens
dargestellt.

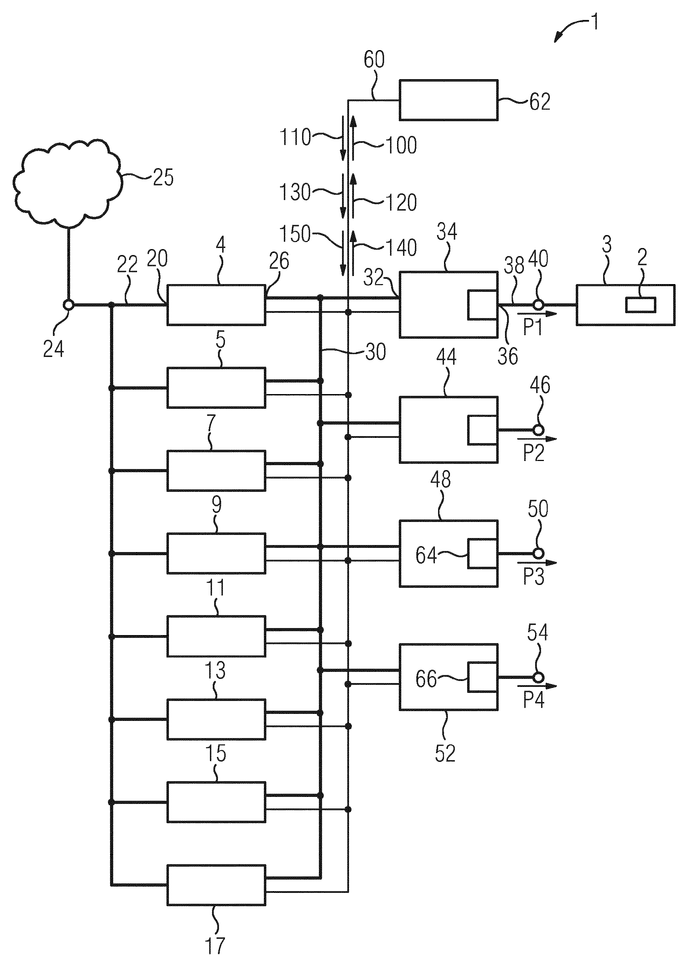

In der Figur ist eine Ladeeinrichtung 1 zum elektrischen Laden einer Fahrbatterie 2 eines elektrisch antreibbaren Fahrzeugs 3 dargestellt. Im Ausführungsbeispiel ist diese Ladeeinrichtung als eine Gleichstrom-Ladeeinrichtung 1 ausgestaltet. Diese Ladeeinrichtung kann aber auch als eine Wechselstrom-Ladeeinrichtung ausgestaltet sein, die an dem Ladeanschluss einen Lade-Wechselstrom zum Laden der Fahrbatterie bereitstellt.

Die Gleichstrom-Ladeeinrichtung 1 weist einen ersten netzanschlussseitigen Umrichter 4 auf, der im Ausführungsbeispiel als ein Wechselstrom-Gleichstrom-Umrichter (AC/DC-Converter) ausgebildet ist. Weiterhin weist die Ladeeinrichtung 1 einen zweiten netzanschlussseitigen Umrichter 5, einen dritten netzanschlussseitigen Umrichter 7, einen vierten netzanschlussseitigen Umrichter 9, einen fünften netzanschlussseitigen Umrichter 11, einen sechsten netzanschlussseitigen Umrichter 13, einen siebenten netzanschlussseitigen Umrichter 15, und einen achten netzanschlussseitigen Umrichter 17 auf, die auch als Wechselstrom-Gleichstrom-Umrichter ausgebildet sind.

Ein Eingang 20 des ersten netzanschlussseitigen Umrichters 4 ist mittels einer leistungsübertragenden elektrischen Verbindung 22 mit einem Netzanschluss 24 der Ladeeinrichtung 1 elektrisch verbunden. Der Netzanschluss 24 dient zum Anschluss der Ladeeinrichtung 1 an ein Energieversorgungsnetz 25. Dabei kann es sich beispielsweise um ein Niederspannungsnetz (z.B. 400V Dreiphasenwechselstrom) handeln.

Ein Ausgang 26 des ersten netzanschlussseitigen Umrichters 4 ist elektrisch über eine leistungsübertragende Verbindung mit einem Zwischenkreis 30 verbunden, der als Gleichstrom-Zwischenkreis 30 (DC power link 30) ausgestaltet ist.

Die Eingänge der netzanschlussseitigen Umrichter 5, 7, 9, 11, 13, 15 und 17 sind ebenfalls über leistungsübertragende elektrische Verbindungen mit dem Netzanschluss 24 elektrisch verbunden; die Ausgänge dieser netzanschlussseitigen Umrichter sind elektrisch mit dem Gleichstrom-Zwischenkreis 30 verbunden. Die netzanschlussseitigen Umrichter 4, 5, 7, 9, 11, 13, 15 und 17 sind dabei elektrisch parallel geschaltet. Den Ausgängen der netzanschlussseitigen Umrichter können z.B. Tiefsetzsteller nachgeschaltet sein (nicht in der Figur dargestellt), welche die an den Ausgängen auftretenden Ausgangsspannungen aneinander anpassen, so dass keine oder nur kleine Ausgleichsströme zwischen den Umrichtern auftreten.

Der Gleichstrom-Zwischenkreis 30 ist elektrisch mit einem Eingang 32 eines ersten ladeanschlussseitigen Umrichters 34 verbunden. Ein Ausgang 36 des ersten ladeanschlussseitigen Umrichters 34 ist elektrisch über eine leistungsübertragende Verbindung 38 mit einem ersten Ladeanschluss 40 der Ladeeinrichtung 1 verbunden. Die leistungsübertragenden Verbindungen sind z.B. als Leitungen mit hoher Stromtragfähigkeit ausgestaltet und mit Linien dicker Strichstärke dargestellt.

Der erste Ladeanschluss 40 ist im Ausführungsbeispiel als ein elektrisches Kabel ausgebildet, welches mit einem elektrischen Ladestecker oder einer elektrischen Ladebuchse versehen ist (der Ladestecker oder die Ladebuchse sind in der Figur nicht dargestellt). An dem ersten Ladeanschluss 40 ist eine erste elektrische Leistung P1 zum Laden der Fahrbatterie 2 des elektrisch antreibbaren Fahrzeugs 3 bereitstellbar.

Weiterhin ist in gleicher Art und Weise an den Gleichstrom-Zwischenkreis 30 ein zweiter ladeanschlussseitiger Umrichter 44 angeschlossen, dessen Ausgang mit einem zweiten Ladeanschluss 46 elektrisch verbunden ist. Ebenso weist die Ladeeinrichtung 1 einen dritten ladeanschlussseitigen Umrichter 48, dessen Ausgang mit einem dritten Ladeanschluss 50 elektrisch verbunden ist, sowie einen vierten ladeanschlussseitigen Umrichter 52, dessen Ausgang mit einem vierten Ladeanschluss 54 elektrisch verbunden ist, auf. Über den zweiten Ladeanschluss 46 kann die zweite elektrische Leistung P2, über den dritten Ladeanschluss 50 kann die dritte elektrisch Leistung P3 und über den vierten Ladeanschluss 54 kann die vierte elektrische Leistung P4 übertragen werden.

Die Gleichstrom-Ladeeinrichtung 1 kann beispielsweise auch ein Teil eines sogenannten Gleichstrom-Satelliten-Ladesystems sein, bei dem die Ladeanschlüsse 40, 46, 50 und 54 jeweils zu fest installierten Ladesäulen (den sogenannten Satelliten) geführt werden, an denen dann das elektrisch antreibbare Fahrzeug anschließbar ist.

Über Datenverbindungen 60 ist eine Steuerung 62 der Ladeeinrichtung 1 mit den netzanschlussseitigen Umrichtern und mit den ladeanschlussseitigen Umrichtern verbunden. Über diese Datenverbindungen kann die Steuerung 62 (Controller 62) Nachrichten bzw. Signale von den einzelnen Umrichtern empfangen und Nachrichten bzw. Signale an die einzelnen Umrichter absenden. Die Steuerung 62 stellt einen ladeeinrichtungsinternen Controller 62 dar. Die Datenverbindungen sind z.B. als Datenleitungen oder als ein Bussystem (wie beispielsweise ein CAN-Bus) ausgestaltet und mit Linien dünner Strichstärke dargestellt.

Mittels dieser Nachrichten bzw. Signale kann die Steuerung 62 jeden der netzanschlussseitigen Umrichter und/oder jeden der ladeanschlussseitigen Umrichter zuschalten oder abschalten, also z.B. einschalten oder ausschalten. Mit anderen Worten kann die Steuerung mittels dieser Nachrichten bzw. Signale die netzanschlussseitigen Umrichter und die ladeanschlussseitigen Umrichter ansprechen.

Der erste ladeanschlussseitige Umrichter 34 weist eine Messeinrichtung, der zweite ladeanschlussseitige Umrichter 44 weist eine Messeinrichtung, der dritte ladeanschlussseitige Umrichter 48 weist eine dritte Messeinrichtung 64 und der vierte ladeanschlussseitige Umrichter 52 weist eine vierte Messeinrichtung 66 auf. Mittels dieser Messeinrichtungen/Sensoren kann die über den jeweils zugeordneten Ladeanschluss fließende bzw. übertragene elektrische Leistung P1, P2, P3 bzw. P4 gemessen werden.

Im Ausführungsbeispiel ist der Netzanschluss 24 als ein Wechselstromnetzanschluss 24 ausgebildet; die netzanschlussseitigen Umrichter 4, 5, 7, 9, 11, 13, 15 und 17 sind Wechselstrom-Gleichstrom-Umrichter und der Zwischenkreis 30 ist ein Gleichstrom-Zwischenkreis. Die ladeanschlussseitigen Umrichter 34, 44, 48 und 52 sind Gleichstrom-Gleichstrom-Umrichter. Bei den elektrischen Leistungen P1, P2, P3 und P4 handelt es sich im Ausführungsbeispiel jeweils um Wirkleistungen.

Die Ladeeinrichtung 1 funktioniert wie folgt:
Über das elektrische Energieversorgungsnetz 25 wird die Ladeeinrichtung 1 über den Netzanschluss 24 mit elektrischer Energie versorgt. Diese elektrische Energie gelangt in Form von Wechselstrom zu den Eingängen aller netzanschlussseitigen Umrichter. Im Ausgangszustand der Ladeeinrichtung befinden sich alle Umrichter im Ruhezustand (Standby), d.h. es fließt keine elektrische Energie durch die Umrichter. Ist einer der netzanschlussseitigen Umrichter (z. B. der erste netzanschlussseitige Umrichter 4) zugeschaltet, dann wird der Wechselstrom von dem Umrichter 4 in Gleichstrom umgewandelt und dieser Gleichstrom über den Ausgang 26 an den Gleichstrom-Zwischenkreis 30 weitergeleitet. Ist einer der netzanschlussseitigen Umrichter abgeschaltet, so wirkt dieser abgeschaltete Umrichter wie ein geöffneter Schalter; dieser abgeschaltete Umrichter trägt nicht zur Versorgung des Gleichstrom-Zwischenkreises mit elektrischer Energie bzw. elektrischer Leistung bei.

Die am Gleichstrom-Zwischenkreis 30 bereitgestellte elektrische Energie in Form von Gleichstrom wird mittels der ladeanschlussseitigen Umrichter umgewandelt in Gleichstrom anderer Spannung und/oder anderer Stromstärke; dieser Gleichstrom wird an den Ladeanschlüssen bereitgestellt und zu den an den Ladeanschlüssen angeschlossenen Fahrzeugen übertragen. Beispielsweise überträgt der erste ladeanschlussseitige Umrichter 34 elektrische Energie bzw. elektrische Leistung P1 über den ersten Ladeanschluss 40 zu dem an diesem Ladeanschluss angeschlossenen Fahrzeug 3. Mittels der Messeinrichtung 60 wird die Größe der ersten elektrischen Leistung P1 gemessen.

Der dem Ladeanschluss 40 zugeordneten ladeanschlussseitige Umrichter 34 überträgt Informationen über die über den jeweiligen Ladeanschluss 40 zu übertragende elektrische Leistung P1 über die Datenverbindung 60 an die Steuerung 62. In Abhängigkeit von diesen Informationen schaltet die Steuerung 62 (mittels über die Datenverbindung 60 übertragenen Nachrichten oder Signalen) die netzanschlussseitigen Umrichter 4, 5, 7, 11, 13, 15 und 17 entweder zu oder ab (oder lässt diese in ihrem vorliegenden Zustand). Die Steuerung 62 überwacht also die über die Ladeanschlüsse 40, 46, 50 und 54 zu übertragende elektrische Leistung fortlaufend und schaltet bei Bedarf fortlaufend die netzanschlussseitigen Umrichter zu oder ab. Dabei schaltet die Steuerung 62 die netzanschlussseitigen Umrichter derart zu oder ab, dass die insgesamt über die Ladeanschlüsse 40, 46, 50 und 54 zu übertragende elektrische Leistung von einer möglichst geringen Anzahl an netzanschlussseitigen Umrichtern bereitgestellt wird. Dies hat zur Folge, dass die zugeschalteten netzanschlussseitigen Umrichter jeweils überwiegend mit einer relativ großen elektrischen Leistung betrieben werden, die überwiegend gleich oder nahe ihrer Nennleistung ist. Dadurch werden die netzanschlussseitigen Umrichter "gut ausgelastet", was zu einem Betrieb mit einem hohen Wirkungsgrad führt. Damit arbeitet das System sehr energieeffizient. Umrichter, die gleich oder nahe ihrer Nennleistung betrieben werden, haben nämlich einen höheren Wirkungsgrad als Umrichter, die mit Leistungen betrieben werden, die viel kleiner sind als ihre Nennleistung.

Die netzanschlussseitigen Umrichter 4, 5, 7, 9, 11, 13, 15 und 17 können jeweils 30 kW elektrische Leistung übertragen, ihre Nennleistung beträgt also jeweils 30 kW. Die netzanschlussseitigen Umrichter 4, 5, 7, 9, 11, 13, 15 und 17 sind als Wechselstrom-Gleichstrom-Umrichter ausgestaltet. Die ladeanschlussseitigen Umrichter 34, 44, 48 und 52 können jeweils 50 kW elektrische Leistung übertragen, die Nennleistung der ladeanschlussseitigen Umrichter beträgt also jeweils 50 kW. Die ladeanschlussseitigen Umrichter 34, 44, 48 und 52 sind als Gleichstrom-Gleichstrom-Umrichter ausgestaltet.

Im Folgenden ist ein beispielhafter Verfahrensablauf angegeben. An den ersten Ladeanschluss 40 wird das erste elektrisch antreibbare Fahrzeug 3 angeschlossen, welches mit einer Leistung von 10 kW geladen werden soll. Das Fahrzeug 3 sendet Informationen über die benötigte Leistung an die Ladeeinrichtung. Daraufhin sendet der erste ladeanschlussseitige Umrichter 34 eine Nachricht 100 an die Steuerung 62. Diese Nachricht 100 beinhaltet die Informationen, dass am ersten Ladeanschluss 40 eine elektrische Leistung von 10 kW bereitgestellt werden muss, um das Fahrzeug aufladen zu können (P1 = 10 kW). Daraufhin erkennt die Steuerung 62, dass die Leistung P1 = 10 kW mit lediglich dem ersten netzanschlussseitigen Umrichter 4 zur Verfügung gestellt werden kann. Daraufhin sendet die Steuerung 62 eine zweite Nachricht 110 bzw. ein zweites Signal 110 über die Datenverbindung 60 an den ersten netzanschlussseitigen Umrichter 4. Mittels dieser Nachricht 110 wird der erste netzanschlussseitige Umrichter 4 zugeschaltet. Der erste netzanschlussseitige Umrichter 4 liefert dann die benötigte Leistung von 10 kW an den Gleichstrom-Zwischenkreis 30 und der erste ladeanschlussseitigen Umrichter 34 kann diese Leistung von 10 kW über den ersten Ladeanschluss 40 als erste elektrische Leistung P1 bereitstellen. Mit dieser Leistung P1 wird dann das erste elektrisch antreibbare Fahrzeug geladen.

Daraufhin wird am zweiten Ladeanschluss 46 ein zweites elektrisch antreibbares Fahrzeug angeschlossen, welches mit einer Leistung von 50 kW geladen werden soll. Daraufhin sendet der zweite ladeanschlussseitige Umrichter 44 eine dritte Nachricht 120 an die Steuerung 62. Diese Nachricht 120 enthält die Informationen, dass am zweiten Ladeanschluss 46 zusätzlich 50 kW elektrische Leistung bereitgestellt werden muß. Daraufhin ermittelt die Steuerung 62 die insgesamt über die Ladeanschlüsse zu übertragende elektrische Leistung: Pgesamt = P1 + P2 = 10 kW + 50 kW = 60 kW.

Die Steuerung 62 erkennt, dass die Leistung der Größe 60 kW nicht allein mit dem ersten netzanschlussseitigen Umrichter 4 übertragen werden kann, sondern dass dazu zusätzlich der zweite netzanschlussseitige Umrichter 5 notwendig ist. Daraufhin sendet die Steuerung 62 eine vierte Nachricht 130 bzw. ein viertes Signal 130 an den zweiten netzanschlussseitigen Umrichter 5. Mittels dieser vierten Nachricht 130 wird der zweite netzanschlussseitige Umrichter 5 zugeschaltet. Sowohl der erste netzanschlussseitige Umrichter 4 als auch der zweite netzanschlussseitige Umrichter 5 liefert jeweils 30 kW Leistung. Damit kann die insgesamt benötige elektrische Leistung Pgesamt = 60 kW an den Ladeanschlüssen 40 und 46 bereitgestellt werden.

Danach wird an den dritten Ladeanschluss 50 ein drittes elektrisch antreibbares Fahrzeug angeschlossen, das mit einer Ladeleistung von 50 kW aufzuladen ist. Daraufhin sendet der dritte ladeanschlussseitige Umrichter 48 eine fünfte Nachricht 140 an die Steuerung 62. Mittels dieser fünften Nachricht 140 wird der Steuerung mitgeteilt, dass am dritten Ladeanschluss 50 eine Leistung P3 = 50 kW bereitzustellen ist. Daraufhin ermittelt die Steuerung 62, dass die insgesamt an den Ladeanschlüssen zu übertragende elektrische Leistung Pgesamt = P1 + P2 + P3 = 10 kW + 50 kW + 50 kW = 110 kW beträgt. Die Steuerung 62 erkennt, dass zum Bereitstellen einer Leistung von 110 kW vier netzanschlussseitige Umrichter notwendig sind: Die ersten drei netzanschlussseitigen Umrichter 4, 5, 7, werden jeweils mit ihren Nennleistungen von je 30 kW betrieben, während der vierte netzanschlussseitige Umrichter 9 mit einer Leistung von 20 kW betrieben wird. Daraufhin sendet die Steuerung 62 eine sechste Nachricht 150 bzw. ein sechstes Signal 150 an den dritten netzanschlussseitigen Umrichter 7 und den vierten netzanschlussseitigen Umrichter 9und schaltet diese beiden netzanschlussseitigen Umrichter damit zu. Daraufhin speisen die netzanschlussseitigen Umrichter 4, 5, 7 und 9 elektrische Energie in den Gleichstrom-Zwischenkreis 30 ein.
Somit wird erreicht, dass die insgesamt über die Ladeanschlüsse zu übertragende elektrische Leistung Pgesamt von einer minimalen Anzahl an netzanschlussseitigen Umrichtern (hier von den Umrichtern 4, 5, 7 und 9) zur Verfügung gestellt wird. Dadurch werden zumindest die Umrichter 4, 5 und 7 mit ihrer Nennleistung betrieben, was einen optimalen Wirkungsgrad ermöglicht. Lediglich der Umrichter 9 wird mit einer kleineren Leistung betrieben.

Während des Ladevorgangs reduziert sich mit zunehmender Ladezeit die an den Ladeanschlüssen benötigte Leistung. Die Fahrzeuge teilen dies der Ladeeinrichtung mit. Daraufhin schaltet die Ladeeinrichtung nicht benötigte netzanschlussseitige Umrichter ab.

Wie die netzanschlussseitigen Umrichter sind bei der Ladeeinrichtung 1 sind auch die ladeanschlussseitigen Umrichter 34, 44, 48 und 52 jeweils einzeln zuschaltbar oder abschaltbar. Mittels Nachrichten oder Signalen ähnlich den Nachrichten/Signalen 110, 130 oder 150 kann die Steuerung 62 auch die ladeanschlussseitigen Umrichter 34, 44, 48 und/oder 52 zuschalten und abschalten.

Im Ausgangszustand der Ladeeinrichtung sind die ladeanschlussseitigen Umrichter abgeschaltet, sie befinden sich z.B. im Ruhezustand (Standby), d.h. es fließt keine elektrische Energie durch die Umrichter. Wenn ein Fahrzeug an einen Ladeanschluss angeschlossen wird, dann wird die Steuerung 62 darüber informiert. Daraufhin schaltet die Steuerung den ladeanschlussseitigen Umrichter, dem der jeweilige Ladeanschluss zugeordnet (d.h. zugehörig) ist, zu. Wenn z.B. nur an den ersten Ladeanschluss 40 ein Fahrzeug angeschlossen wird, dann wird von der Steuerung 62 nur der erste ladeanschlussseitige Umrichter 34 (dem der erste Ladeanschluss 40 zugeordnet ist) zugeschaltet. Auch dadurch wird ein energieeffizienter Betrieb der Ladeeinrichtung erreicht.

Den Ausgängen der netzanschlussseitigen Umrichter können nicht in der Figur dargestellte Tiefsetzsteller nachgeschaltet sein, welche die an den Ausgängen auftretenden Ausgangsspannungen aneinander anpassen, so dass keine oder nur kleine Ausgleichsströme zwischen den Umrichtern auftreten.

Die Steuerung 62 kann beispielsweise als ein Mikroprozessor ausgestaltet sein. Mittels der Steuerung 62 werden die netzanschlussseitigen Umrichter abhängig von der Anzahl der zu versorgenden Ladeanschlüsse und abhängig von der über diese Ladeanschlüsse zu übertragenden elektrischen Leistung zugeschaltet bzw. abgeschaltet. Diese ladeeinrichtungsinterne Controller-gesteuerte Energieverteilung ermöglicht einen effizienten Betrieb der Ladeeinrichtung 1. Die netzanschlussseitigen Umrichter werden dynamisch angesetzt, d. h. sie werden nur zugeschaltet, wenn ihre Leistung tatsächlich benötigt wird. Damit wird ein sehr effizientes System mit einem hohen Wirkungsgrad erreicht.

Bei der beschriebenen vorteilhaften Art der Ansteuerung der parallel geschalteten netzanschlussseitigen Umrichter werden diese Umrichter dynamisch angesetzt. Das bedeutet, dass die netzanschlussseitigen Umrichter nur dann zugeschaltet werden, wenn tatsächlich ihre Leistung benötigt wird. Der Energiefluss wird von der internen Steuerung 62 gesteuert. Damit wird eine effiziente Ladeeinrichtung bzw. ein effizientes Laden erreicht.

## Patentansprüche

1. Ladeeinrichtung (1) zum elektrischen Laden einer Fahrbatterie eines elektrisch antreibbaren Fahrzeugs mit
- einem Netzanschluss (24) zum Anschluss der Ladeeinrichtung an ein Energieversorgungsnetz,
- mindestens einem Ladeanschluss (40, 46, 50, 54) zum Anschluss eines elektrisch antreibbaren Fahrzeugs,
- einer Mehrzahl von netzanschlussseitigen elektrischen Umrichtern (4, 5, 7, 9, 11, 13, 15, 17), deren Eingänge elektrisch mit dem Netzanschluss (24) verbunden sind und deren Ausgänge elektrisch mit einem Zwischenkreis (30) der Ladeeinrichtung (1) verbunden sind,
- wobei die netzanschlussseitigen Umrichter (4, 5, 7, 9, 11, 13, 15, 17) jeweils einzeln zuschaltbar oder abschaltbar sind,
**gekennzeichnet durch**
- eine Steuerung (62), die dazu eingerichtet ist, in Abhängigkeit von der insgesamt über den mindestens einen Ladeanschluss (40, 46, 50, 54) zu übertragenden elektrischen Leistung die netzanschlussseitigen Umrichter (4, 5, 7, 9, 11, 13, 15, 17) zuzuschalten oder abzuschalten,
wobei die Steuerung dazu eingerichtet ist, die netzanschlussseitigen Umrichter (4, 5, 7, 9, 11, 13, 15, 17) so zuzuschalten oder abzuschalten, dass die insgesamt über den mindestens einen Ladeanschluss (40, 46, 50, 54) zu übertragende elektrische Leistung von einer minimalen Anzahl an netzanschlussseitigen Umrichtern zur Verfügung gestellt wird.

2. Ladeeinrichtung nach Anspruch 1, **gekennzeichnet durch**
- mindestens einen ladeanschlussseitigen Umrichter (34, 44, 48, 52), dessen Eingang mit dem Zwischenkreis (30) und dessen Ausgang mit dem Ladeanschluss (40) verbunden ist.

3. Ladeeinrichtung nach einem der vorhergehenden Ansprüche,
**dadurch gekennzeichnet, dass**
- die netzanschlussseitigen Umrichter (4, 5, 7, 9, 11, 13, 15, 17) elektrisch parallel geschaltet sind.

4. Ladeeinrichtung nach einem der vorhergehenden Ansprüche,
**dadurch gekennzeichnet, dass**
- die Steuerung (62) eingerichtet ist, die insgesamt über den mindestens einen Ladeanschluss (40, 46, 50, 54) zu übertragende elektrische Leistung fortlaufend zu überwachen und bei Bedarf fortlaufend die netzanschlussseitigen Umrichter (4, 5, 7, 9, 11, 13, 15, 17) zuzuschalten oder abzuschalten.

5. Ladeeinrichtung nach einem der vorhergehenden Ansprüche,
**dadurch gekennzeichnet, dass**
- die Steuerung eingerichtet ist, bei mindestens einem bereits zugeschalteten netzanschlussseitigen Umrichter (4) erst dann einen weiteren netzanschlussseitigen Umrichter (5) zuzuschalten, wenn die insgesamt über den mindestens einen Ladeanschluss (40, 46, 50, 54) zu übertragende elektrische Leistung größer ist als die Summe der Nennleistungen der bereits zugeschalteten netzanschlussseitigen Umrichter (4).

6. Ladeeinrichtung nach einem der vorhergehenden Ansprüche,
**dadurch gekennzeichnet, dass**
- die ladeanschlussseitigen Umrichter (34, 44, 48, 52) jeweils einzeln zuschaltbar oder abschaltbar sind, und
- die Steuerung (62) eingerichtet ist, die ladeanschlussseitigen Umrichter (34, 44, 48, 52) jeweils nur dann zuzuschalten, wenn der den einzelnen ladeanschlussseitigen Umrichtern jeweils zugeordnete Ladeanschluss (40, 46, 50, 54) elektrisch mit einem Fahrzeug verbunden ist.

7. Ladeeinrichtung nach einem der vorhergehenden Ansprüche, **gekennzeichnet durch**
- mindestens eine Messeinrichtung (60, 62, 64, 66) zum Erfassen der über den mindestens einen Ladeanschluss (40, 46, 50, 54) übertragenen elektrischen Leistung.

8. Ladeeinrichtung nach einem der vorhergehenden Ansprüche,
**dadurch gekennzeichnet, dass**
- der Netzanschluss ein Wechselstrom-Netzanschluss (24) ist, die netzanschlussseitigen elektrischen Umrichter Wechselstrom-Gleichstrom-Umrichter (4, 5, 7, 9, 11, 13, 15, 17) sind und der Zwischenkreis ein Gleichstrom-Zwischenkreis (30) ist.

9. Ladeeinrichtung nach einem der vorhergehenden Ansprüche, **dadurch gekennzeichnet, dass**
- der mindestens eine ladeanschlussseitige Umrichter (34, 44, 48, 52) ein Gleichstrom-Gleichstrom-Umrichter ist.

10. Verfahren zum elektrischen Laden einer Fahrbatterie eines elektrisch antreibbaren Fahrzeugs mittels einer Ladeeinrichtung (1), die einen Netzanschluss (24) zum Anschluss der Ladeeinrichtung an ein Energieversorgungsnetz, mindestens einem Ladeanschluss (40, 46, 50, 54) zum Anschluss eines elektrisch antreibbaren Fahrzeugs, und eine Mehrzahl von netzanschlussseitigen elektrischen Umrichtern (4, 5, 7, 9, 11, 13, 15, 17), deren Eingänge elektrisch mit dem Netzanschluss (24) verbunden sind und deren Ausgänge elektrisch mit einem Zwischenkreis (30) der Ladeeinrichtung verbunden sind, aufweist, wobei die netzanschlussseitigen Umrichter jeweils einzeln zuschaltbar oder abschaltbar sind,
**dadurch gekennzeichnet, dass** bei dem Verfahren
- in Abhängigkeit von der insgesamt über den mindestens einen Ladeanschluss (40, 46, 50, 54) zu übertragenden elektrischen Leistung die netzanschlussseitigen Umrichter (4, 5, 7, 9, 11, 13, 15, 17) zugeschaltet oder abgeschaltet werden, wobei die netzanschlussseitigen Umrichter (4, 5, 7, 9, 11, 13, 15, 17) so zugeschaltet oder abgeschaltet werden, dass die insgesamt über den mindestens einen Ladeanschluss (40, 46, 50, 54) zu übertragende elektrische Leistung von einer minimalen Anzahl an netzanschlussseitigen Umrichtern zur Verfügung gestellt wird.

11. Verfahren nach Anspruch 10,
**dadurch gekennzeichnet, dass**
- die insgesamt über den mindestens einen Ladeanschluss (40, 46, 50, 54) zu übertragende elektrische Leistung fortlaufend überwacht wird und bei Bedarf fortlaufend die netzanschlussseitigen Umrichter (4, 5, 7, 9, 11, 13, 15, 17) zugeschaltet oder abgeschaltet werden.

12. Verfahren nach einem der Ansprüche 10 bis 11,
**dadurch gekennzeichnet, dass**
- bei mindestens einem bereits zugeschalteten netzanschlussseitigen Umrichter (4) erst dann ein weiterer netzanschlussseitiger Umrichter (5) zugeschaltet wird, wenn die insgesamt über den mindestens einen Ladeanschluss (40, 46, 50, 54) zu übertragende elektrische Leistung größer ist als die Summe der Nennleistungen der bereits zugeschalteten netzanschlussseitigen Umrichter (4).

13. Verfahren nach einem der Ansprüche 10 bis 12,
**dadurch gekennzeichnet, dass**
- die ladeanschlussseitigen Umrichter (34, 44, 48, 52) jeweils einzeln zuschaltbar oder abschaltbar sind, und
- die ladeanschlussseitigen Umrichter (34, 44, 48, 52) jeweils nur dann zugeschaltet werden, wenn der den einzelnen ladeanschlussseitigen Umrichtern jeweils zugeordnete Ladeanschluss (40, 46, 50, 54) elektrisch mit einem Fahrzeug verbunden ist.

## Claims

1. Charging device (1) for electrically charging a traction battery of an electrically drivable vehicle comprising
- a grid connection (24) for connecting the charging device to an energy supply grid,
- at least one charging connection (40, 46, 50, 54) for connecting an electrically drivable vehicle,
- a plurality of grid-connection-side electrical converters (4, 5, 7, 9, 11, 13, 15, 17), the inputs of which are electrically connected to the grid connection (24) and the outputs of which are electrically connected to a link (30) of the charging device (1),
- wherein the grid-connection-side converters (4, 5, 7, 9, 11, 13, 15, 17) are in each case individually connectable or disconnectable,
**characterized by**
- a controller (62) configured to connect or disconnect the grid-connection-side converters (4, 5, 7, 9, 11, 13, 15, 17) depending on the electrical power to be transmitted in total via the at least one charging connection (40, 46, 50, 54), wherein the controller is configured to connect or disconnect the grid-connection-side converters (4, 5, 7, 9, 11, 13, 15, 17) such that the electrical power to be transmitted in total via the at least one charging connection (40, 46, 50, 54) is made available by a minimum number of grid-connection-side converters.

2. Charging device according to Claim 1,
**characterized by**
- at least one charging-connection-side converter (34, 44, 48, 52), the input of which is connected to the link (30) and the output of which is connected to the charging connection (40).

3. Charging device according to either of the preceding claims,
**characterized in that**
- the grid-connection-side converters (4, 5, 7, 9, 11, 13, 15, 17) are electrically connected in parallel.

4. Charging device according to any of the preceding claims,
**characterized in that**
- the controller (62) is configured to continuously monitor the electrical power to be transmitted in total via the at least one charging connection (40, 46, 50, 54) and to continuously connect or disconnect the grid-connection-side converters (4, 5, 7, 9, 11, 13, 15, 17) as necessary.

5. Charging device according to any of the preceding claims,
**characterized in that**
- the controller is configured, in the case of at least one already connected grid-connection-side converter (4), to connect a further grid-connection-side converter (5) only if the electrical power to be transmitted in total via the at least one charging connection (40, 46, 50, 54) is greater than the sum of the rated powers of the already connected grid-connection-side converters (4).

6. Charging device according to any of the preceding claims,
**characterized in that**
- the charging-connection-side converters (34, 44, 48, 52) are in each case individually connectable or disconnectable, and
- the controller (62) is configured to connect the charging-connection-side converters (34, 44, 48, 52) in each case only if the charging connection (40, 46, 50, 54) respectively assigned to the individual charging-connection-side converters is electrically connected to a vehicle.

7. Charging device according to any of the preceding claims,
**characterized by**
- at least one measuring device (60, 62, 64, 66) for detecting the electrical power transmitted via the at least one charging connection (40, 46, 50, 54).

8. Charging device according to any of the preceding claims,
**characterized in that**
- the grid connection is an AC grid connection (24), the grid-connection-side electrical converters are AC-DC converters (4, 5, 7, 9, 11, 13, 15, 17), and the link is a DC link (30).

9. Charging device according to any of the preceding claims,
**characterized in that**
- the at least one charging-connection-side converter (34, 44, 48, 52) is a DC-DC converter.

10. Method for electrically charging a traction battery of an electrically drivable vehicle by means of a charging device (1) comprising a grid connection (24) for connecting the charging device to an energy supply grid, at least one charging connection (40, 46, 50, 54) for connecting an electrically drivable vehicle, and a plurality of grid-connection-side electrical converters (4, 5, 7, 9, 11, 13, 15, 17), the inputs of which are electrically connected to the grid connection (24) and the outputs of which are electrically connected to a link (30) of the charging device, wherein the grid-connection-side converters are in each case individually connectable or disconnectable,
**characterized in that** in the method
- the grid-connection-side converters (4, 5, 7, 9, 11, 13, 15, 17) are connected or disconnected depending on the electrical power to be transmitted in total via the at least one charging connection (40, 46, 50, 54), wherein the grid-connection-side converters (4, 5, 7, 9, 11, 13, 15, 17) are connected or disconnected such that the electrical power to be transmitted in total via the at least one charging connection (40, 46, 50, 54) is made available by a minimum number of grid-connection-side converters.

11. Method according to Claim 10,
**characterized in that**
- the electrical power to be transmitted in total via the at least one charging connection (40, 46, 50, 54) is continuously monitored and the grid-connection-side converters (4, 5, 7, 9, 11, 13, 15, 17) are continuously connected or disconnected as necessary.

12. Method according to either of Claims 10 and 11,
**characterized in that**
- in the case of at least one already connected grid-connection-side converter (4), a further grid-connection-side converter (5) is connected only if the electrical power to be transmitted in total via the at least one charging connection (40, 46, 50, 54) is greater than the sum of the rated powers of the already connected grid-connection-side converters (4).

13. Method according to any of Claims 10 to 12,
**characterized in that**
- the charging-connection-side converters (34, 44, 48, 52) are in each case individually connectable or disconnectable, and
- the charging-connection-side converters (34, 44, 48, 52) are in each case connected only if the charging connection (40, 46, 50, 54) respectively assigned to the individual charging-connection-side converters is electrically connected to a vehicle.

## Revendications

1. Installation de charge (1) pour la charge électrique d'une batterie d'un véhicule à traction électrique, avec
- une prise de réseau (24) pour la connexion de l'installation de charge à un réseau d'alimentation en énergie,
- au moins une prise pour la charge (40, 46, 50, 54) pour la connexion d'un véhicule à traction électrique,
- une pluralité de convertisseurs électriques du côté connexion au réseau (4, 5, 7, 9, 11, 13, 15, 17) dont les entrées sont reliées électriquement à la prise de réseau (24) et dont les sorties sont reliées électriquement à un circuit intermédiaire (30) de l'installation de charge (1),
- les convertisseurs du côté connexion au réseau (4, 5, 7, 9, 11, 13, 15, 17) pouvant être chacun individuellement connectés ou déconnectés,
**caractérisée par**
- une commande (62) qui est agencée de sorte à connecter ou à déconnecter les convertisseurs du côté connexion au réseau (4, 5, 7, 9, 11, 13, 15, 17) en fonction de la puissance électrique à transmettre globalement à l'au moins une prise pour la charge (40, 46, 50, 54),
la commande étant agencée de sorte à connecter ou à déconnecter les convertisseurs du côté connexion au réseau (4, 5, 7, 9, 11, 13, 15, 17) de sorte que la puissance électrique à transmettre globalement à l'au moins une prise pour la charge (40, 46, 50, 54) soit rendue disponible par un nombre minimal de convertisseurs du côté connexion au réseau.

2. Installation de charge selon la revendication 1,
**caractérisée par**
- au moins un convertisseur du côté connexion à la charge (34, 44, 48, 52), dont l'entrée est reliée au circuit intermédiaire (30) et dont la sortie est reliée à la prise pour la charge (40).

3. Installation de charge selon l'une des revendications précédentes,
**caractérisée en ce que**
- les convertisseurs du côté connexion au réseau (4, 5, 7, 9, 11, 13, 15, 17) sont branchés électriquement en parallèle.

4. Installation de charge selon l'une des revendications précédentes,
**caractérisée en ce que**
- la commande (62) est agencée de sorte à contrôler en continu la puissance électrique à transmettre globalement à l'au moins une prise pour la charge (40, 46, 50, 54), et au besoin à connecter ou à déconnecter en continu les convertisseurs du côté connexion au réseau (4, 5, 7, 9, 11, 13, 15, 17).

5. Installation de charge selon l'une des revendications précédentes,
**caractérisée en ce que**
- la commande est agencée de sorte qu'avec au moins un convertisseur du côté connexion au réseau (4) déjà connecté, elle ne connecte un autre convertisseur du côté connexion au réseau (5) que lorsque la puissance électrique à transmettre globalement à l'au moins une prise pour la charge (40, 46, 50, 54) est supérieure à la somme des puissances nominales du convertisseur du côté connexion au réseau (4) déjà connecté.

6. Installation de charge selon l'une des revendications précédentes,
**caractérisée en ce que**
- les convertisseurs du côté connexion à la charge (34, 44, 48, 52) peuvent chacun être connectés ou déconnectés individuellement, et
- la commande (62) est agencée de sorte que les convertisseurs du côté connexion à la charge (34, 44, 48, 52) ne puissent chacun être connectés que lorsque la prise pour la charge (40, 46, 50, 54) associée à chacun des convertisseurs individuels du côté connexion à la charge est reliée électriquement à un véhicule.

7. Installation de charge selon l'une des revendications précédentes,
**caractérisée par**
- au moins un dispositif de mesure (60, 62, 64, 66) pour l'acquisition de la puissance électrique transmise par l'au moins une prise pour la charge (40, 46, 50, 54).

8. Installation de charge selon l'une des revendications précédentes,
**caractérisée en ce que**
- la prise de réseau est une prise de réseau en courant alternatif (24), les convertisseurs électriques du côté connexion au réseau sont des convertisseurs courant alternatif-courant continu (4, 5, 7, 9, 11, 13, 15, 17), et le circuit intermédiaire est un circuit intermédiaire à courant continu (30).

9. Installation de charge selon l'une des revendications précédentes,
**caractérisée en ce que**
l'au moins un convertisseur du côté connexion à la charge (34, 44, 48, 52) est un convertisseur courant continu-courant continu.

10. Procédé pour la charge électrique d'une batterie d'un véhicule à traction électrique, au moyen d'une installation de charge (1) qui comprend une prise de réseau (24) pour la connexion de l'installation de charge à un réseau d'alimentation en énergie, au moins une prise pour la charge (40, 46, 50, 54) pour la connexion à un véhicule à traction électrique, et une pluralité de convertisseurs électriques du côté connexion au réseau (4, 5, 7, 9, 11, 13, 15, 17) dont les entrées sont reliées électriquement à la prise de réseau (24) et dont les sorties sont reliées électriquement à un circuit intermédiaire (30) de l'installation de charge, les convertisseurs du côté connexion au réseau pouvant être chacun individuellement connectés ou déconnectés,
**caractérisé en ce que** par le procédé
- en fonction de la puissance électrique à transmettre globalement à l'au moins une prise pour la charge (40, 46, 50, 54), les convertisseurs du côté connexion au réseau (4, 5, 7, 9, 11, 13, 15, 17) sont connectés ou déconnectés, les convertisseurs du côté connexion au réseau (4, 5, 7, 9, 11, 13, 15, 17) étant connectés ou déconnectés de sorte que la puissance électrique à transmettre globalement à l'au moins une prise pour la charge (40, 46, 50, 54) soit rendue disponible par un nombre minimal de convertisseurs du côté connexion au réseau.

11. Procédé selon la revendication 10,
**caractérisé en ce que**
- la puissance électrique à transmettre globalement à l'au moins une prise pour la charge (40, 46, 50, 54) est contrôlée en continu et au besoin les convertisseurs du côté connexion au réseau (4, 5, 7, 9, 11, 13, 15, 17) sont connectés ou déconnectés en continu.

12. Procédé selon l'une des revendications 10 à 11,
**caractérisé en ce que**
- avec au moins un convertisseur du côté connexion au réseau (4) déjà connecté, un autre convertisseur du côté connexion au réseau (5) n'est connecté que lorsque la puissance électrique à transmettre globalement à l'au moins une prise pour la charge (40, 46, 50, 54) est supérieure à la somme des puissances nominales du convertisseur du côté connexion au réseau (4) déjà connecté.

13. Procédé selon l'une des revendications 10 à 12,
**caractérisé en ce que**
- les convertisseurs du côté connexion à la charge (34, 44, 48, 52) peuvent chacun être connectés ou déconnectés individuellement, et
- les convertisseurs du côté connexion à la charge (34, 44, 48, 52) ne peuvent chacun être connectés que lorsque la prise pour la charge (40, 46, 50, 54) associée à chacun des convertisseurs individuels du côté connexion à la charge est reliée électriquement à un véhicule.
